# EUROPEAN PATENT SPECIFICATION

(11) **EP 3 408 052 B1**
(45) Date of publication and mention of the grant of the patent: **10.03.2021**
(21) Application number: 17709177.4
(22) Date of filing: 27.01.2017
(51) Int. Cl.: B23Q 7/04, B23Q 39/02

(54) **MACHINE TOOL**
MASCHINENWERKZEUG
MACHINE-OUTIL

(30) Priority: 28.01.2016 IT UB20160244
(43) Date of publication of application: 05.12.2018
(73) Proprietor: Tecprocess SA, 6987 Caslano (CH)
(72) Inventor: BALDACCINI, Stefano, 6987 Caslano (CH)
(74) Representative: Fabiano, Piero
(86) International application number: PCT/IB2017/050441
(87) International publication number: WO 2017/130146

(56) References cited:
- EP-A1- 1 795 298
- EP-A1- 1 961 515
- DE-A1-102009 011 672
- DE-A1-102010 051 865
- DE-U1-202005 021 206
- DE-U1-202010 018 053

## Description

### FIELD OF THE INVENTION

The present invention concerns the field of machine tools.

### KNOWN ART

As known, a machine tool is a machine designed to transform the shape and size of objects of any material, by selectively removing extra material in various forms, through tools. Machine tools generally allow only a limited number of machining operations on the item to be machined, according to the limited number of tools they can dispose of, and as a result, a complex item requiring various mechanical operations needs to be conveyed from one machine tool to the next one in order to be machined as required.

Therefore, production lines may provide for different machine tools placed side by side, each dedicated to a specific machining operation, such as turning, milling, boring etc.

If different machine tools are provided, this involves both a remarkable bulk and the necessity to have conveying devices outside the machine tools, at least between a machine and the next one.

Therefore, conveying the item to be machined requires that the machine tools and the various devices to convey items are coordinated, thereby causing the complexity of planning the machining cycles to increase.

In order to try to reduce the number of machine tools for the production line it is known, for example, to provide machine tools equipped with multi-tools, for example equipped with a rotating block mounted on a fixed head and with a plurality of tools selected among rotating tools and other machining tools and radially supported on the rotating block.

When the rotating block is rotated around its axis, one of the supported tools (for example, a rotating tool) is brought to the machining position.

US2004/0103510 describes a turret of the above mentioned type and equipped with a drive motor arranged in a rotating drum. The drive motor is indirectly connected on the rotating tool mounted on the turret and rotated through a coupling mechanism.

On the contrary, the patent application of JP2003-251505 describes a lathe turret adapted to transmit the driving power from a drive motor to a rotating tool mounted on the turret. Power is transmitted through a transmission unit comprising bevel gears and bearings. The turret includes a rotary hollow drum inside which the transmission unit is housed.

However, the Applicant observed that the type of machines illustrated above can perform a limited number of machining operations, whereby workshops and/or current production lines require different machines, thus resulting in large bulks and often complex movement systems to move items between a machine tool and the next one.

The Applicant further observed that it is known to arrange robots, for example of anthropomorphous type, for moving the items to be machined between a machine tool and the next one.

However the Applicant noticed that, by providing a robot for moving the item, although the production cycle is automated, on the other hand the bulk problem is not solved but rather increased together with that of simplicity and coordination of the production line. The Applicant also noticed that, in any case, even with the robots the item movement between a machine and the next one still requires quite some time.

Documents DE202005021206U, DE102010051865, DE202005021206 and EP175298 are also known, which describe machine tools provided with a machining assembly and a movement member inside the machine.

The Applicant observed that in DE202005021206U the tool store is outside the machining assembly and is only able to translate, thereby causing structural complexity and reducing the tool-change speed.

The movement member does not move between a machine axially-outer edge and the other one, whereby other devices outside the machine for loading and unloading the items to be machined are still necessary.

The Applicant observed that in EP175298 the machine tool is very bulky and complex because of the arrangement of the machining assembly with respect to the movement member.

Furthermore, the tool store is outside the machining assembly and is only able to translate, thereby causing structural complexity and reducing the tool-change speed. Even in this case, the movement member does not move between a machine axially-outer edge and the other one, so that other devices outside the machine for loading and unloading the items to be machined are still necessary.

The Applicant found that the above stated problems can be solved by a machine tool in which the movement device for the movement between a machine and the next one is integrated in the machine tool itself and uses the working axes of the machine tool.

### SUMMARY OF THE INVENTION

Therefore, a first aspect of the invention relates to a machine tool comprising:
- at least one supporting base comprising a first axially outer edge and a second axially outer edge, which are arranged at two axially opposite ends of the machine;
- at least one machining assembly, arranged between said first axially outer edge and said second axially outer edge;
- at least one movement member to move an item to be machined; said at least one machining assembly or said at least one movement member being adapted to move along at least two machine working axes;
characterized in that
said item movement member is integrated in the machine tool and comprises at least one first movement axis of a translationally moving item to detect the item translation from said first axially outer edge to the remaining second axially outer edge, and vice versa, said movement member being movable along said first axis to bring the item to be machined from said first axially outer edge to the remaining second axially outer edge, and vice versa; and at least one second movement axis of a rotationally moving item to detect the rotation of said item to be machined and to load and unload the item to/from the machine;
- said at least one machining assembly comprises:
- at least one electrospindle extending around a vertical axis
- at least one rotating drum supported by said base and supporting at least two toolholders on which at least two rotating tools are mounted; said rotating drum being rotatingly mounted around said electrospindle; said electrospindle being placed in a recess inside the turret body;
- said electrospindle comprising a motor, a rotating shaft for the transmission of the motion relating to said motor and an engaging portion adapted to couple with at least one toolholder;
- said tool being rotationally driven directly by said rotating shaft;
- each toolholder extending along a vertical axis;
- said rotating drum being rotatingly mounted so as to rotate in order to align each toolholder with said engaging portion.

In the scope of the present invention with:
- controlled working axis, or simply working axis of the machine or of a machining assembly thereof, or a member thereof, is meant a given movement of the machine or its machining assembly or its member, measured by an encoder and controlled by at least one computer through at least one motor, so as to allow its machining assembly or its member to be precisely positioned at an arbitrary point of the available travel, so that the item to be machined interacts with the tool of the machining assembly for the machining of the item itself. For example: a general numerical control milling machine, whose tool can move in three directions (x, y, z) has three controlled "machine axes", i.e. three moving directions controlled by the computer through the motors and its computer can be programmed so as to stop the tool at any desired point along these three directions (within the limits of the maximum mechanical travel); possible secondary movements of on/off type (scrap doors, pumps for water or air, solenoid valves, etc..) are not working "axes";
- electrospindle is meant a spindle provided with an integrated inner motor adapted to rotate the electrospindle shaft; the electrospindle is adapted to have a tool holder directly mounted at an end of its rotation shaft without the interposition of further mechanical joints or transmission members.
- controlled item movement axis, or more simply item movement axis is meant a given movement of the movement member or a part thereof, measured by an encoder and controlled by at least one computer through at least one motor, so that the item to be machined can be accurately positioned at an arbitrary point of the available travel of the movement member or part thereof, such movement being generally not aimed to machine the item, but to pick up the item from an external store or to reposition the same in an external store at the end of the machining operation.

In the above said aspect, the present invention can have at least one of the preferred characteristics hereinafter described.

Advantageously, the first axially outer edge and a second axially outer edge are the two axially outermost points of the machine tool.

Preferably, said at least one first movement axis of a translationally moving item is coincident with a machine working axis.

Conveniently, said at least one second axis of rotational movement is coincident with a machine working axis.

Preferably, said at least one machining assembly is adapted to move along at least one third machine working axis.

Advantageously, the movement member comprises
- at least one track, whose way defines said first movement axis of a translationally moving item extending between a first axially outer edge (2a) of the machine and the remaining second axially outer edge (2b);
- at least one arm extending along an axis; said at least one arm being adapted to translate along said at least one track;
- at least one restraining element to restrain an item mounted so as to rotate around said second movement axis of a rotationally moving item.

Preferably, the movement member comprises at least one first supporting slide to support said at least one arm, the slide being adapted to slide along said at least one track.

Conveniently, the movement member comprises at least one second track substantially extending perpendicularly to said first track and at least one second slide sliding along said second track.

Conveniently, the movement member comprises a supporting plate to support said at least one arm; said at least one second track extending along said supporting plate and said at least one second slide being integral with said first supporting slide.

Advantageously, the travel of the second slide on said second track identifies a third movement axis Y-Y of a translationally moving item.

Preferably, the movement member comprises a wrist element rotatingly mounted so as to rotate around said second movement axis of a rotationally moving item; said wrist element is interposed between said at least one arm and said at least one item restraining element so as to move said restraining element away from said second movement axis of a rotationally moving item.

Advantageously, said at least one machining assembly comprises at least one turret comprising:
- at least one turret body supported by said base;
- at least one rotating drum supported by said turret body;
- at least one electrospindle placed in a recess inside the turret body.

Preferably, said at least one machining assembly comprises at least two turrets placed side by side.

Conveniently, said two turrets placed side by side are arranged at a distance shorter than 5 cm.

### BRIEF DESCRIPTION OF THE DRAWINGS

Further characteristics and advantages of the invention will be more evident from the detailed description of some preferred, but not exclusive, embodiments of a machine tool according to the present invention.

This description will be presented hereinafter by referring to the attached drawings, provided for illustration purposes only and without limitation, in which:
- figure 1 is a schematic perspective view of a first embodiment of the machine according to the present invention, with the item movement member arranged at a first axially outer edge for grasping the item to be machined;
- figure 2 is a schematic front view of the machine according to the present invention, with the item movement member arranged at the first turret for machining the item by a rotating tool mounted on the first turret;
- figure 3 is a schematic perspective view of the machine according to the present invention, with the item movement member arranged at the second axially outer edge for releasing the machined item from the machine tool according to the present invention;
- figure 4 is an enlarged perspective view of the item movement member according to the present invention, arranged at a second axially outer edge and rotated;
- figure 5 is an enlarged perspective view of the item movement member according to the present invention, arranged at a position in the middle of its travel with the wrist element arranged in vertical position to allow the item to be machined by a tool of a turret; and
- figure 6 is a perspective view of two machines according to the present invention placed side by side.

### DETAILED DESCRIPTION OF EMBODIMENTS OF THE INVENTION

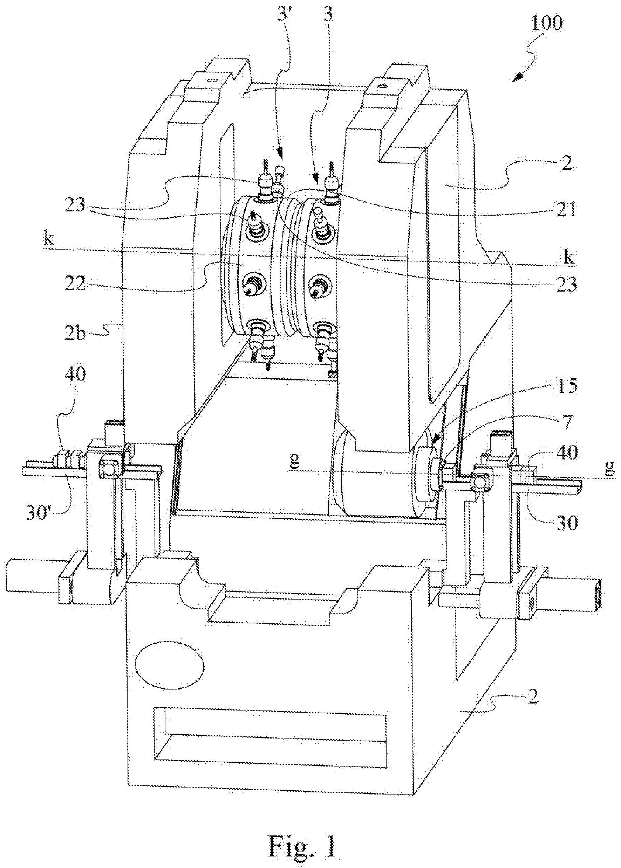

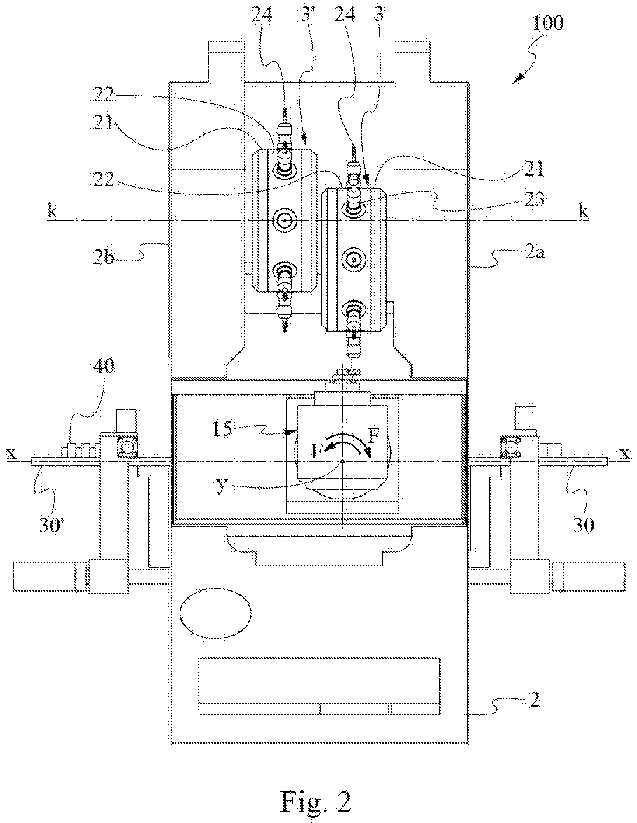

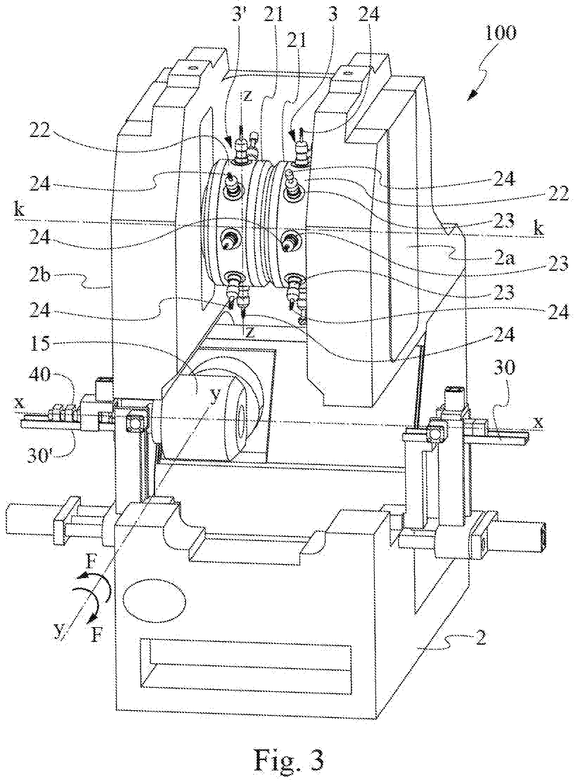

Referring to figures 1-5, a tool machine according to the present invention is denoted by the numerical reference 100.

The machine 100 has at least one turret comprising:
- at least one supporting base 2 comprising a first axially outer edge 2a and a second axially outer edge 2b, opposite to each other;
- at least one machining assembly 3;
- at least one movement member 15 to move an item 40 to be machined.

The machining assembly 3 and/or the item movement member 15 are adapted to move along at least three first controlled machine working axes.

Preferably, in the embodiment depicted in figures 1-5, the machining assembly 3 and/or the item movement member 15 are adapted to move along at least four controlled machine working axes.

Controlled working or machining axis, or simply working axis of the machine or of a machining assembly thereof or a member thereof, mean a given movement of the machine or its machining assembly or its member measured by an encoder and controlled by at least one computer through at least one motor, so as to allow the machine or its machining assembly or its member to be precisely positioned at an arbitrary point of the available travel so that the item to be machined interacts with the tool of the machining assembly for the machining of the item itself. Controlled item movement axis, or more simply item movement axis means a given movement of the movement member, or a part thereof, measured by an encoder and controlled by at least one computer through at least one motor, so that the item to be machined can be accurately positioned at an arbitrary point of the available travel of the movement member or part thereof.

The item movement member 15 is integrated in the machine tool 100 and comprises at least one first movement axis X-X of a translationally moving item to translate the item to be machined from a first axially outer edge 2a to the remaining second axially outer edge 2b, and vice versa, at least one second movement axis Y-Y, in figure, to rotate the item to be machined around the aforesaid axis and a third axis G-G, preferably orthogonal to the previous ones, to rotate the item to be machined around said third axis G-G.

As will be described in more detail hereinafter, in the embodiment shown in the figures, the machine tool 100 comprises five controlled machining axes two of which are coincident with the item movement axes.

In other words, with the tool machine 100 according to the present invention, an item movement device outside the machine is no more required.

In fact, the movement member 15 actuates the movement along the axes X-X and/or Y-Y and/or G-G both for machining the item 40 together with the machining assembly 3 and for moving the item 40 as it enters and exits the machine.

Therefore, the movement member 15 can move the item either between suitable stores adjacent thereto but outside the machine, or between a machine according to the present invention and a second machine according to present invention placed side by side with the first one.

The Applicant found that it is possible to eliminate a movement device, outside the machine, to move an item to be machined because the movement of the item 40 as it enters and exits the machine or between a machine and the next one, is made by the controlled working axes of the machine itself.

In the embodiment shown in figures 1-3, the machining assembly 3 is a turret of the type comprising:
- at least one turret body 21 supported the base 2;
- at least one rotating drum 22 supported by the turret body 21 and supporting at least two toolholders 23 on which at least two rotating tools 24 are mounted (a plurality of rotating tools 24 in the embodiment shown in figures 1-3); said rotating drum 22 being mounted outside the turret body 21 and rotatingly around it;
- at least one electrospindle, not directly shown in figures because it is placed in a recess inside the turret body 21.

The electrospindles are electromechanical components designed for drilling, milling, spot-facing, tapping, cutting, boring, grinding and turning operations.

The electrospindle extends around, and slides along, a vertical axis, the latter identifying a first controlled working axis W-W of the machine.

The electrospindle comprises a motor, a rotating shaft for the transmission of the motion relating to the motor and an engaging portion adapted to couple with at least one toolholder 23 having a rotating tool 24 mounted thereto.

The rotating tool 24 is engaged through the toolholder to the electrospindle and is rotationally driven directly by the rotating shaft of the latter.

Each toolholder 23 extends along a vertical axis.

The rotating drum 22 is rotatingly mounted so as to rotate in order to align each toolholder 23 with the engaging portion of the electrospindle.

It should be understood that the machining assembly may be constituted by a multi-tool spindle or another tool for machining the item, such as a mill or a drill, without departing from the protection scope of the present invention.

The machining assembly 3 is arranged vertically above the movement member 15.

Advantageously, in the embodiment shown in figures, the machine tool has two turrets placed side by side, hereafter a single turret will be described in detail, being understood that what stated applies to both turrets.

The turret 3 is designed so that at least one rotating tool 24 can be mounted thereto and can be rotationally driven in order to allow the machining of an item by the machine tool 100.

The electrospindles are electromechanical components designed for drilling, milling, spot-facing, tapping, cutting, boring, grinding and turning operations.

As previously mentioned, the rotary drum 22 is rotatingly mounted so as to rotate around the controlled working axis K-K in order to align a toolholder 23, and thus its tool 24, with the engaging portion of the electrospindle arranged inside the turret body 21.

Therefore, a tool locking device of a toolholder 23 is housed in the conical seat of the engagement portion 6, in order to clamp and rotate the tool holder 23 through the electrospindle, and as a result the rotating tool 24 with the electrospindle.

The tool locking device allows the rotating shaft of the electrospindle to engage the tool 24 through the toolholder 23.

In other words, no mechanical transmission unit is interposed between the rotating shaft and the toolholder 23.

The spindle can translate in vertical direction with respect to the turret body 21 and the rotating drum 22, that is to say along a vertical direction identified by the axis Z-Z of the electrospindle itself.

In detail, the electrospindle can translate in vertical direction, along the controlled working axis Z-Z with respect to the rotary drum 22, between a working position, in which the tool 24 clamped by the electrospindle through the toolholder 23 works on a mechanical item, and a tool changing position in which the electrospindle is lifted so as not to interfere inside the turret body 21 with the rotating drum 22, the latter being therefore free to rotate to bring a toolholder 23, and thus a tool 24, to a position so as to be coupled with the rotating shaft.

The rotating shaft is directly coupled with the toolholder 23, i.e. without interposing transmissions.

For this purpose, the electrospindle has a translation assembly comprising a pneumatic cylinder, not shown, adapted to vertically translate the electrospindle.

As an alternative, a hydraulic cylinder could be provided without departing from the protection scope of the present invention.

The rotary drum 22 comprises a plurality of fastening elements to fasten the toolholders to the drum 22 itself and a plurality of locking devices to lock the toolholders 23.

The turret 3 for machine tool according to the present invention is adapted to perform different operations by inserting, in the locking device, the tool holder 23 with the most suitable tool 24, the latter being selected by the rotary drum 22 rotatably mounted with respect to the fixed body 21 and the electrospindle.

Between an operation and the next one, in order to change the tool the following steps are carried out.

The toolholder 23 is released from the engaging portion of the electrospindle.

The electrospindle is lifted.

Then, the rotating drum 22 is rotated to align with the engaging portion of the electrospindle a second toolholder 23 holding a second tool 24 to be used in machining.

Thus, in order to clamp the second tool 24, the electrospindle is lowered until the engaging portion to engage the tool holder 23 is inserted, so that the tool locking device may lock the toolholder 23.

The turret 3 according to the present invention is in the shown working position and the tool 24 can carry out its machining after which, if an additional machining is required, the above described process will be repeated.

By means of the item movement member 15, the item can also be moved from the first turret 3 (in Figure 1-3 on the right side of the sheet) to the second turret 3' placed side by side (in Figure 1-3 on the left side of the sheet), while one or more tools 24 on the first turret are simultaneously changed.

The movement member 15, better described below, is integrated in the machine and allows the movement of the item to be machined between a turret 3 and the other one 3', as well as the picking up from a tool store 30 of an item to be machined 40 bringing it at the first turret 3 and/or the second turret 3' and then, once the machining operations of the item 40 are all completed, to a next item store 30' placed axially outward with respect to the axially outer edge 2b.

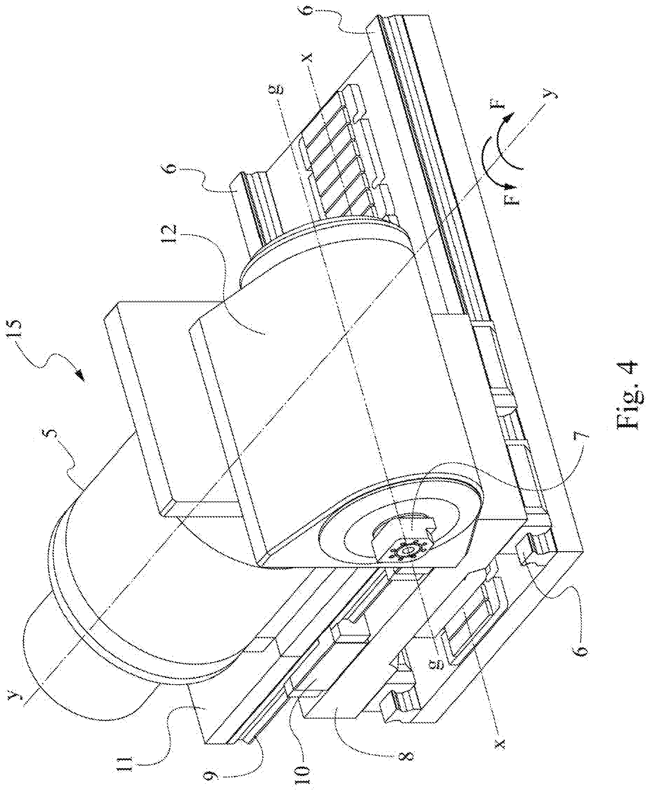

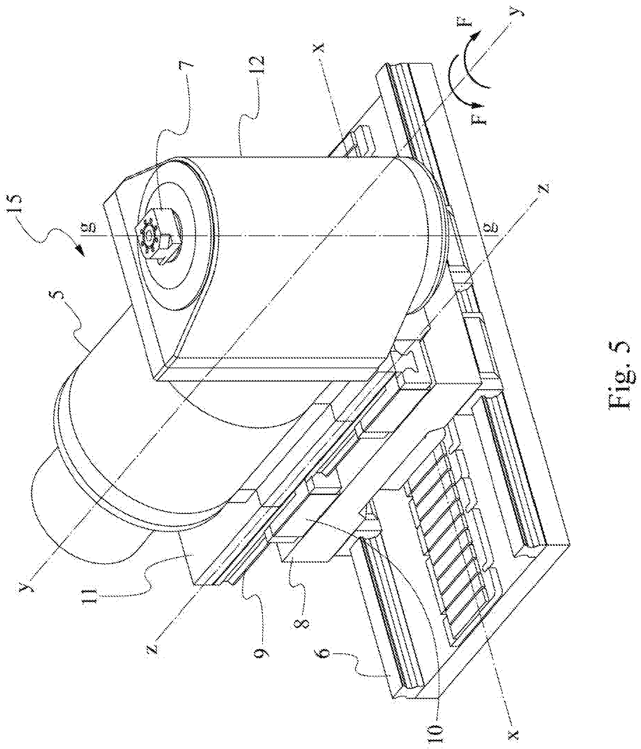

Figures 4 and 5 show an enlarged embodiment of the item movement member 15.

In the embodiment shown, the item movement member 15 comprises an arm 5 extending along an axis y-y orthogonal to the rotation axis K-K of the rotating drums and a track 6 whose way defines the first movement axis of a translationally moving item.

The track 6 extends between a first axially outer edge 2a of the machine and the remaining second axially outer edge 2b. Therefore, the first item movement axis X-X is parallel to the rotation axis of the rotary drums.

The arm 5 is adapted to translate along the track 6 between a first axially outer edge 2a of the machine and the remaining second edge 2b.

The item movement member 15 comprises a restraining element to restrain an item mounted so as to rotate around a second item movement axis.

In particular, the second item movement axis Y-Y identifies the rotating movement of the item, shown by the arrows F in figure.

The movement member 15, in order to slide along the track 6, has a first supporting slide 8 engaged to the track 6 and sliding thereon.

The item movement member 15 further comprises a second track 9 substantially extending perpendicular to the fist track 6 along the direction of the second item movement axis Y-Y and at least one second slide 10 sliding along the second track 9. The travel of the second slide 10 on said second track 9 identifies a third movement axis Y-Y of a translationally moving item.

The second track 9 extends along the supporting plate 11, which in turn supports the arm 5.

The second slide 10 is integral with the first supporting slide 8, the movement of the first supporting slide 8 along the track 6 causes the arm 5 to slide along the track 6 between the first axially outer edge 2a of the machine and the remaining second axially outer edge 2b.

As shown in figures, the movement member 15 comprises a wrist element 12 rotatingly mounted so as to rotate around said second movement axis Y-Y of a rotationally moving item.

The wrist element 12 is interposed between the arm 5 and the item restraining element 7 so as to move said restraining element 7 away from the second movement axis Y-Y of a rotationally moving item.

The wrist element 12 is also shaped so that, while grasping the item, when the movement member is positioned at the first axially outer edge of the machine 100, the restraining element and thus the grasped item are axially outside the first axially outer edge of the machine 100.

The wrist rotates around the second movement axis Y-Y of a rotationally moving item in order to bring the item from a first item grasping configuration, shown for example in figure 1, in which the restraining element 7 and thus the item are arranged along a straight line substantially parallel the first item movement axis X-X, to a second position overturned by 180° in which the item is still arranged along a straight line substantially parallel to the first item movement axis X-X, but with opposite orientation.

In detail, as shown in Figure 1, the item movement member 15 is arranged at the first axially outer edge 2a of the machine so as to grasp the item 40 to be machined from a shelf of an item store 30 outside the machine.

The wrist element is rotated so that once the item 40 is grasped, it is positioned along a straight line parallel to the first movement axis of translationally moving item.

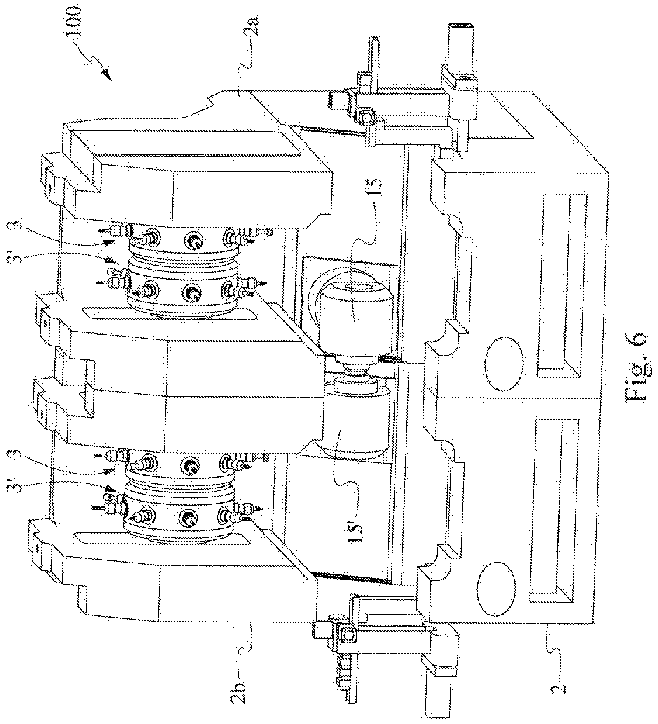

In Figure 6, two machines according to the present invention are mounted side by side so that the second axially outer edge of the first machine is substantially in contact with the first axially outer edge of the second machine.

The track 6 of the first machine and second machine are joined so as to form a single track.

In this way the item, after having been machined by the turrets 3 and 3' of the first machine, can move to the second machine, simply due to the respective item movement members that are integrated.

To move the item from the first to the second machine is not necessary to provide a movement device outside the machines, such as an anthropomorphous robot or another movement device, as the movement members moved with the same controlled axes of the machine also allow the item to be moved between a machine and the next one.

Therefore, the present invention allows a reduction of the time required for moving the item to be machined from a machine to the next one, compared to the time provided by the known art in which the item is moved between the first and the second machine by an anthropomorphous robot outside the machines.

Although in Figure 6 only two machines arranged side by side are provided, a greater number thereof can be provided without departing from the protection scope of the present invention.

The machines arranged side by side are joined only by the track without further coupling means.

The present invention has been described referring to some embodiments. Various modifications may be made to the embodiments herein described in detail, being still within the protection scope of the invention, defined by the following claims.

## Claims

1. Machine tool (100) comprising:
- at least one supporting base (2, 2') comprising a first axially outer edge (2a) and a second axially outer edge (2b), which are arranged at two axially opposite ends of the machine;
- at least one machining assembly (3, 3'), arranged between the two opposite axially outer edges (2a, 2b);
- at least one movement member (15, 15') to move an item (40) to be machined; said at least one machining assembly (3, 3') or said at least one movement member (15, 15') being adapted to move along at least two machine working axes;
wherein said item movement member (15) is integrated in the machine tool (100) and comprises at least one first movement axis (X-X) of a translationally moving item to detect the item translation from said first axially outer edge (2a) to the remaining second axially outer edge (2b), and vice versa, said movement member being movable along said first axis to bring the item to be machined from said first axially outer edge (2a) to the remaining second axially outer edge (2b), and vice versa; and at least one second movement axis (Y-Y) of a rotationally moving item to detect the rotation of said item to be machined and to load and unload the item to/from the machine;
- said at least one machining assembly (3) comprises:
- at least one electrospindle extending around a vertical axis
- at least one rotating drum (22) supported by said base (2) and supporting at least two toolholders (23) on which at least two rotating tools (24) are mounted; said rotating drum (22) being rotatingly mounted around said electrospindle ; said electrospindle being placed in a recess inside a turret body (21);
- said electrospindle comprising a motor, a rotating shaft for the transmission of the motion relating to said motor and an engaging portion adapted to couple with at least one toolholder (23);
- said tool (24) being rotationally driven directly by said rotating shaft;
- each toolholder (23) extending along a vertical axis when coupled with the engaging portion;
- said rotating drum (22) being rotatingly mounted so as to rotate in order to align each toolholder (23) with said engaging portion.

2. Machine tool (100) according to claim 1, **characterized in that** said first axially outer edge (2a) and said second axially outer edge (2b) are the two axially outermost points of said machine tool (100).

3. Machine tool (100) according to claim 1, **characterized in that** said at least one first movement axis (X-X) of a translationally moving item is coincident with a machine working axis.

4. Machine tool (100) according to any one of claims 1 to 3, **characterized in that** said at least one second axis (Y-Y) of rotational movement is coincident with a machine working axis.

5. Machine tool (100) according to any one of claims 1 to 4, **characterized in that** said at least one machining assembly (3, 3') is adapted to move along at least one third machine working axis.

6. Machine tool (100) according to any one of claims 1 to 5, **characterized in that** said item movement member (15) comprises at least one third axis (G-G) of rotational movement to detect a second rotation of said item to be machined.

7. Machine tool (100) according to any one of claims 1 to 5, **characterized in that** said at least one item movement member (15, 15') comprises:
- at least one track (6), whose way defines said first movement axis of a translationally moving item extending from a first axially outer edge (2a) of the machine to the remaining second axially outer edge (2b);
- at least one arm (5, 5') extending along an axis; said at least one arm (5, 5') being adapted to translate along said at least one track (6);
- at least one restraining element to restrain an item mounted so as to rotate around said second movement axis of a rotationally moving item.

8. Machine tool (100) according to claim 7, **characterized in that** said at least one item movement member (15, 15') comprises at least one first supporting slide (8) to support said at least one arm (5, 5') which is adapted to slide along said at least one track (6, 6').

9. Machine tool (100) according to claim 8, **characterized in that** said at least one item movement member (15, 15') comprises at least one second track (9) substantially extending perpendicularly to said first track (6) and at least one second slide (10) sliding along said second track (9).

10. Machine tool (100) according to claim 9, **characterized in that** said at least one item movement member (15, 15') comprises a supporting plate (11) to support said at least one arm (5, 5'); said at least one second track (9) extending along said supporting plate (11) and said at least one second slide (10) being integral with said first supporting slide (8).

11. Machine tool (100) according to claim 9 or 10, **characterized in that** the travel of said second slide (10) on said second track (9) identifies a third movement axis Y-Y of a translationally moving item.

12. Machine tool (100) according to any one of claims 7 to 11, **characterized in that** said item movement member (15, 15') comprises a wrist element (12) rotatingly mounted so as to rotate around said second movement axis of a rotationally moving item; said wrist element (12) being interposed between said at least one arm (5, 5') and said at least one item restraining element (7, 7') so as to move said restraining element (7, 7') away from said second movement axis of a rotationally moving item.

13. Machine tool (100) according to any one of claims 1 to 11, **characterized in that** said at least one machining assembly (3) comprises said at least one turret comprising:
- at least one turret body (21) supported by said base (2);
- said at least one rotating drum (22) supported by said turret body (21); said rotating drum (22) being mounted outside said turret body (21) and rotatingly around it;
- said electrospindle being placed in a recess inside the turret body (21).

14. Machine tool (100) according to claim 13, **characterized in that** said at least one machining assembly (3) comprises at least two turrets placed side by side.

15. Machine tool (100) according to claim 14, **characterized in that** said at least two turrets (3, 3') placed side by side are arranged at a distance shorter than 5 cm.

## Patentansprüche

1. Werkzeugmaschine (100), aufweisend:
- mindestens eine Stützbasis (2, 2') mit einer ersten axialen Außenkante (2a) und einer zweiten axialen Außenkante (2b), die an zwei axial gegenüberliegenden Enden der Maschine angeordnet sind;
- mindestens eine Bearbeitungsanordnung (3, 3'), die zwischen den beiden gegenüberliegenden axialen Außenkanten (2a, 2b) angeordnet ist;
- mindestens ein Bewegungselement (15, 15') zum Bewegen eines zu bearbeitenden Gegenstands (40); wobei mindestens eine Bearbeitungsanordnung (3, 3') oder das mindestens eine Bewegungselement (15, 15') angepasst ist, um sich entlang mindestens zweier Maschinenarbeitsachsen zu bewegen;
wobei das Gegenstandsbewegungselement (15) in die Werkzeugmaschine (100) integriert ist und mindestens eine erste Bewegungsachse (X-X) eines sich translatorisch bewegenden Gegenstands aufweist, um die Gegenstandsverschiebung von der ersten axialen Außenkante (2a) zur verbleibenden zweiten axiale Außenkante (2b) zu erfassen und umgekehrt, wobei das Bewegungselement entlang der ersten Achse beweglich ist, um den zu bearbeitenden Gegenstand von der ersten axialen Außenkante (2a) zur verbleibenden zweiten axialen Außenkante (2b) zu bringen und umgekehrt; und mindestens eine zweite Bewegungsachse (Y-Y) eines sich drehenden Gegenstandes aufweist, um die Drehung des zu bearbeitenden Gegenstands zu erfassen und den Gegenstand zur/von der Maschine zu laden und zu entladen;
- wobei die mindestens eine Bearbeitungsanordnung (3) aufweist:
- mindestens eine Elektrospindel, die sich um eine vertikale Achse erstreckt,
- mindestens eine rotierende Trommel (22), die von der Basis (2) getragen wird und mindestens zwei Werkzeughalter (23) trägt, auf denen mindestens zwei rotierende Werkzeuge (24) montiert sind; wobei die rotierende Trommel (22) rotierend um die Elektrospindel montiert ist; wobei die Elektrospindel in einer Aussparung innerhalb des Revolverkörpers (21) angeordnet ist;
- wobei die Elektrospindel einen Motor, eine rotierende Welle zur Übertragung der Bewegung in Bezug auf den Motor und einen Eingriffsabschnitt aufweist, der zum Koppeln mit mindestens einem Werkzeughalter (23) geeignet ist;
- wobei das Werkzeug (24) direkt von der rotierenden Welle rotationsgetrieben wird;
- wobei jeder Werkzeughalter (23) sich bei Kopplung mit dem Eingriffsabschnitt entlang einer vertikalen Achse erstreckt;
- wobei die rotierende Trommel (22) rotierend montiert ist, um sich zu drehen, um jeden Werkzeughalter (23) mit dem Eingriffsabschnitt auszurichten.

2. Werkzeugmaschine (100) nach Anspruch 1, **dadurch gekennzeichnet, dass** die erste axiale Außenkante (2a) und die zweite axiale Außenkante (2b) die beiden axial äußersten Punkte der Werkzeugmaschine (100) sind.

3. Werkzeugmaschine (100) nach Anspruch 1, **dadurch gekennzeichnet, dass** mindestens eine erste Bewegungsachse (X-X) eines sich translatorisch bewegenden Gegenstands mit einer Maschinenarbeitsachse zusammenfällt.

4. Werkzeugmaschine (100) nach einem der Ansprüche 1 bis 3, **dadurch gekennzeichnet, dass** die mindestens eine zweite Achse (Y-Y) der Drehbewegung mit einer Maschinenarbeitsachse zusammenfällt.

5. Werkzeugmaschine (100) nach einem der Ansprüche 1 bis 4, **dadurch gekennzeichnet, dass** die mindestens eine Bearbeitungsanordnung (3, 3') so ausgelegt ist, dass sie sich entlang mindestens einer dritten Maschinenarbeitsachse bewegt.

6. Werkzeugmaschine (100) nach einem der Ansprüche 1 bis 5, **dadurch gekennzeichnet, dass** das Gegenstandsbewegungselement (15) mindestens eine dritte Achse (G-G) einer Drehbewegung aufweist, um eine zweite Drehung des zu bearbeitenden Gegenstands zu erfassen.

7. Werkzeugmaschine (100) nach einem der Ansprüche 1 bis 5, **gekennzeichnet dadurch, dass** das mindestens eine Gegenstandsbewegungselement (15, 15') aufweist:
- mindestens eine Spur (6), deren Weg die erste Bewegungsachse eines sich translatorisch bewegenden Gegenstands definiert, der sich von einer ersten axialen Außenkante (2a) der Maschine zur verbleibenden zweiten axialen Außenkante (2b) erstreckt;
- mindestens einen Arm (5, 5'), der sich entlang einer Achse erstreckt; wobei mindestens ein Arm (5, 5') angepasst ist, um entlang der mindestens einen Spur (6) zu translatieren;
- mindestens ein Rückhalteelement zum Zurückhalten eines montierten Gegenstands, um sich um die zweite Bewegungsachse eines sich drehenden Gegenstandes zu drehen.

8. Werkzeugmaschine (100) nach Anspruch 7, **dadurch gekennzeichnet, dass** das mindestens eine Gegenstandsbewegungselement (15, 15') mindestens einen ersten Stützschlitten (8) aufweist, um den mindestens einen Arm (5, 5') zu stützen, der angepasst ist, um entlang der mindestens einen Spur (6, 6') zu gleiten.

9. Werkzeugmaschine (100) nach Anspruch 8, **dadurch gekennzeichnet, dass** das mindestens eine Gegenstandsbewegungselement (15, 15') mindestens eine zweite Spur (9) aufweist, die sich im Wesentlichen senkrecht zu der ersten Spur (6) erstreckt, und mindestens einen zweiten Schlitten (10) aufweistt, der entlang der zweiten Spur (9) gleitet.

10. Werkzeugmaschine (100) nach Anspruch 9, **dadurch gekennzeichnet, dass** das mindestens eine Gegenstandsbewegungselement (15, 15') eine Stützplatte (11) aufweist, um den mindestens einen Arm (5, 5') zu stützen; wobei sich mindestens eine zweite Spur (9) entlang der Stützplatte (11) erstreckt und der mindestens eine zweite Schlitten (10) einstückig mit dem ersten Stützschlitten (8) ist.

11. Werkzeugmaschine (100) nach Anspruch 9 oder 10, **dadurch gekennzeichnet, dass** die Bewegung des zweiten Schlittens (10) auf der zweiten Spur (9) eine dritte Bewegungsachse Y-Y eines sich translatorisch bewegenden Gegenstands identifiziert.

12. Werkzeugmaschine (100) nach einem der Ansprüche 7 bis 11, **gekennzeichnet dadurch, dass** das Gegenstandsbewegungselement (15, 15') ein Handgelenkelement (12) aufweist, das rotierend montiert ist, um sich um die zweite Bewegungsachse eines sich drehenden Gegenstands zu drehen; wobei das Handgelenkelement (12) zwischen dem mindestens einen Arm (5, 5') und dem mindestens einen Gegenstand-Rückhalteelement (7, 7') angeordnet ist, um das Rückhalteelement (7, 7') von der zweite Bewegungsachse eines sich drehenden Gegenstandes weg zu bewegen.

13. Werkzeugmaschine (100) nach einem der Ansprüche 1 bis 11, **dadurch gekennzeichnet, dass** die mindestens eine Bearbeitungsanordnung (3) mindestens einen Revolver aufweist, aufweisend:
- mindestens einen Revolverkörper (21), der von der Basis (2) getragen wird;
- wobei mindestens eine rotierende Trommel (22) von dem Revolverkörper (21) getragen wird; wobei die rotierende Trommel (22) außerhalb des Revolverkörpers (21) montiert ist und sich rotierend um diesen dreht;
- wobei die Elektrospindel in einer Aussparung innerhalb des Revolverkörpers (21) angeordnet ist.

14. Werkzeugmaschine (100) nach Anspruch 13, **dadurch gekennzeichnet, dass** die mindestens eine Bearbeitungsanordnung (3) mindestens zwei nebeneinander angeordnete Revolver aufweist.

15. Werkzeugmaschine (100) nach Anspruch 14, **dadurch gekennzeichnet, dass** mindestens zwei nebeneinander angeordnete Revolver (3, 3') in einem Abstand von weniger als 5 cm angeordnet sind.

## Revendications

1. Machine-outil (100) comprenant :
- au moins une base de support (2, 2') comprenant un premier bord axialement extérieur (2a) et un second bord axialement extérieur (2b), qui sont agencés à deux extrémités axialement opposées de la machine ;
- au moins un ensemble d'usinage (3, 3'), agencé entre les deux bords axialement extérieurs (2a, 2b) opposés ;
- au moins un organe de déplacement (15, 15') pour déplacer un article (40) devant être usiné ;
ledit au moins un ensemble d'usinage (3, 3') ou ledit au moins un organe de déplacement (15, 15') étant adaptés pour se déplacer le long d'au moins deux axes de travail de machine ;
dans laquelle ledit organe de déplacement (15) d'article est intégré dans la machine-outil (100) et comprend au moins un premier axe de déplacement (X-X) d'un article se déplaçant par translation pour détecter la translation d'article à partir dudit premier bord axialement extérieur (2a) jusqu'au second bord axialement extérieur (2b) restant, et vice versa, ledit organe de déplacement étant mobile le long dudit premier axe pour amener l'article à être usiné à partir dudit premier bord axialement extérieur (2a) jusqu'au second bord axialement extérieur (2b) restant, et vice versa ; et au moins un deuxième axe de déplacement (Y-Y) d'un article se déplaçant par rotation pour détecter la rotation dudit article devant être usiné et pour charger et décharger l'article dans/à partir de la machine ;
- ledit au moins un ensemble d'usinage (3) comprend :
- au moins une électrobroche s'étendant autour d'un axe vertical ;
- au moins un tambour rotatif (22) supporté par ladite base (2) et supportant au moins deux porte-outils (23) sur lesquels au moins deux outils rotatifs (24) sont montés ; ledit tambour rotatif (22) étant monté de manière rotative autour de ladite électrobroche ; ladite électrobroche étant placée dans un évidement à l'intérieur d'un corps de tourelle (21) ;
- ladite électrobroche comprenant un moteur, un arbre rotatif pour la transmission du mouvement relatif audit moteur et une partie d'entrée en prise adaptée pour être accouplée à au moins un porte-outil (23) ;
- ledit outil (24) étant entraîné par rotation directement par ledit arbre rotatif ;
- chaque porte-outil (23) s'étendant le long d'un axe vertical lorsqu'il est couplé à la partie d'entrée en prise ;
- ledit tambour rotatif (22) étant monté de manière rotative de façon à tourner afin d'aligner chaque porte-outil (23) sur ladite partie d'entrée en prise.

2. Machine-outil (100) selon la revendication 1, **caractérisée en ce que** ledit premier bord axialement extérieur (2a) et ledit second bord axialement extérieur (2b) sont les deux points les plus éloignés axialement de ladite machine-outil (100).

3. Machine-outil (100) selon la revendication 1, **caractérisée en ce que** ledit au moins un premier axe de déplacement (X-X) d'un article se déplaçant par translation coïncide avec un axe de travail de machine.

4. Machine-outil (100) selon l'une quelconque des revendications 1 à 3, **caractérisée en ce que** ledit au moins un deuxième axe (Y-Y) de déplacement par rotation coïncide avec un axe de travail de machine.

5. Machine-outil (100) selon l'une quelconque des revendications 1 à 4, **caractérisée en ce que** ledit au moins un ensemble d'usinage (3, 3') est adapté pour se déplacer le long d'au moins un troisième axe de travail de machine.

6. Machine-outil (100) selon l'une quelconque des revendications 1 à 5, **caractérisée en ce que** ledit organe de déplacement (15) d'article comprend au moins un troisième axe (G-G) de déplacement par rotation pour détecter une seconde rotation dudit article devant être usiné.

7. Machine-outil (100) selon l'une quelconque des revendications 1 à 5, **caractérisée en ce que** ledit au moins un organe de déplacement (15, 15') d'article comprend :
- au moins un rail (6), dont un trajet définit ledit premier axe de déplacement d'un article se déplaçant par translation s'étendant à partir d'un premier bord axialement extérieur (2a) de la machine jusqu'au second bord axialement extérieur (2b) restant ;
- au moins un bras (5, 5') s'étendant le long d'un axe ; ledit au moins un bras (5, 5') étant adapté pour effectuer une translation le long dudit au moins un rail (6) ;
- au moins un élément de retenue pour retenir un article monté de façon à tourner autour dudit deuxième axe de déplacement d'un article se déplaçant par rotation.

8. Machine-outil (100) selon la revendication 7, **caractérisée en ce que** ledit au moins un organe de déplacement (15, 15') d'article comprend au moins un premier coulisseau de support (8) pour supporter ledit au moins un bras (5, 5') qui est adapté pour glisser le long dudit au moins un rail (6, 6').

9. Machine-outil (100) selon la revendication 8, **caractérisée en ce que** ledit au moins un organe de déplacement (15, 15') d'article comprend au moins un second rail (9) s'étendant sensiblement perpendiculairement audit premier rail (6) et au moins un second coulisseau (10) glissant le long dudit second rail (9).

10. Machine-outil (100) selon la revendication 9, **caractérisée en ce que** ledit au moins un organe de déplacement (15, 15') d'article comprend une plaque de support (11) pour supporter ledit au moins un bras (5, 5') ; ledit au moins un second rail (9) s'étendant le long de ladite plaque de support (11) et ledit au moins un second coulisseau (10) formant un seul bloc avec ledit premier coulisseau de support (8).

11. Machine-outil (100) selon la revendication 9 ou 10, **caractérisée en ce que** la course dudit second coulisseau (10) sur ledit second rail (9) identifie un troisième axe de déplacement Y-Y d'un article se déplaçant par translation.

12. Machine-outil (100) selon l'une quelconque des revendications 7 à 11, **caractérisée en ce que** ledit organe de déplacement (15, 15') d'article comprend un élément tourillon (12) monté de manière rotative de façon à tourner autour dudit deuxième axe de déplacement d'un article se déplaçant par rotation ; ledit élément tourillon (12) étant interposé entre ledit au moins un bras (5, 5') et ledit au moins un élément de retenue (7, 7') d'article de façon à déplacer ledit élément de retenue (7, 7') à distance dudit deuxième axe de déplacement d'un article se déplaçant par rotation.

13. Machine-outil (100) selon l'une quelconque des revendications 1 à 11, **caractérisée en ce que** ledit au moins un ensemble d'usinage (3) comprend ladite au moins une tourelle comprenant :
- au moins un corps de tourelle (21) supporté par ladite base (2) ;
- ledit au moins un tambour rotatif (22) supporté par ledit corps de tourelle (21) ; ledit tambour rotatif (22) étant monté à l'extérieur dudit corps de tourelle (21) et de manière rotative autour de lui ;
- ladite électrobroche qui est placée dans un évidement à l'intérieur du corps de tourelle (21).

14. Machine-outil (100) selon la revendication 13, **caractérisée en ce que** ledit au moins un ensemble d'usinage (3) comprend au moins deux tourelles placées côte à côte.

15. Machine-outil (100) selon la revendication 14, **caractérisée en ce que** lesdites au moins deux tourelles (3, 3') placées côte à côte sont agencées à une distance plus courte que 5 cm.
